# EUROPEAN PATENT SPECIFICATION

(11) **EP 3 566 265 B1**
(45) Date of publication and mention of the grant of the patent: **21.12.2022**
(21) Application number: 18700394.2
(22) Date of filing: 03.01.2018
(51) Int. Cl.: H01R 13/621, F16B 43/00, F16B 43/02, F16B 39/10, F16B 39/24, H01R 13/512, H01R 13/74

(54) **LOCKING DEVICE AND CONNECTOR**
VERRIEGELUNGSVORRICHTUNG UND VERBINDER
DISPOSITIF DE VERROUILLAGE ET CONNECTEUR

(30) Priority: 06.01.2017 CN 201710010094
(43) Date of publication of application: 13.11.2019
(73) Proprietor: Sibas Electronics (Xiamen) Co., Ltd, Xiamen (CN); Tyco Electronics (Shanghai) Co. Ltd., Shanghai 200131 (CN)
(72) Inventor: YUAN, Qiang, Xiamen, Fujian (CN); ZENG, Shaowei, Xiamen (CN); WANG, Yong, Shanghai (CN); XU, Xiang, Shanghai (CN)
(74) Representative: Grünecker Patent- und Rechtsanwälte PartG mbB
(86) International application number: PCT/EP2018/050127
(87) International publication number: WO 2018/127512

(56) References cited:
- EP-A1- 2 565 989
- US-A- 722 649
- US-A- 972 086
- US-A- 1 335 944
- US-A- 3 422 721

## Description

### BACKGROUND OF THE INVENTION

### Field of the Invention

Embodiments of the present invention relate to a locking device and a connector comprising the locking device.

### Description of the Related Art

In the prior art, a heavy load connector adapted to be mounted on an installation panel generally includes a shell, a flange, and a plurality of contacts. The contacts are received in the shell. The shell is locked to the flange by a locking device. The flange is adapted to be fixed to the installation panel. In this way, the heavy load connector may be mounted and fixed onto the installation panel.

In the prior art, the locking device generally comprises a screw, a sealing ring, and a gasket. The screw passes through a connection hole formed in the shell and is screwed into a threaded hole formed in the flange. The sealing ring is sleeved on the screw and adapted to be pressed on an installation surface of the shell, so as to seal the connection hole in the shell. The gasket is sleeved on the screw and adapted to be pressed between a head of the screw and the sealing ring, so as to prevent the screw from being loosened.

However, in the prior art, during tightening the screw, the screw will drive the gasket to rotate with it, and an installation surface of the shell may be worn by the gasket, which will destroy a protection coating on the shell and reduce the service life of the shell. Furthermore, the sealing ring may be also worn by the gasket when the gasket is rotated, which will damage the sealing ring and reduce the service life of the sealing ring. Thereby, in the prior art, after several locking and unlocking operations, the sealing ring will be severely worn and damaged and cannot achieve a predetermined waterproof sealing effect.

US 972 086 A discloses a nut lock for use on railroad rails. The nut lock consists of a plate of metal having a substantially circular central portion provided with a centrally disposed bolt receiving opening. The metal surrounding said opening is dished to form an annular projection having a cross-section arcuate in shape. Furthermore, the nut lock comprises a locking arm extending from the edge of the circular central portion being adapted to contact with a fixed object when the nut lock is in position preventing rotation of the plate.

US 3 422 721 A concerns a self-aligning and sealing member for use with a fastener, such as a bolt or nut. The member comprises an arcuate washer having a ring shaped plastic filler joined to a concave side thereof which defines a generally convex arcuate outer surface.

US 722 649 A discloses a nut lock consisting of a plate having a bolt opening and a peripheral rounded edge adapted to conform to a concave recess. The plate further comprises holding-lips arranged at approximately 90° to one another and a tongue located between said holding-lips partially severed from the plate on a line corresponding to the side of the nut. The tongue is bent outwardly so that the tongue will bind inwardly against the side of the nut.

EP 2 565 989 A1 relates to a device connector to be mounted and fixed to a device. A male connector is mounted and fixed to a case of a device. The male connector includes a tightening bolt with a tightening portion to be tightened using a tool in screwing the tightening bolt into a bolt hole in an axial direction of the bolt hole.

### SUMMARY OF THE INVENTION

The present invention has been made to overcome or alleviate at least one aspect of the above mentioned disadvantages.

There is provided a locking device and a connector comprising the locking device, wherein the locking device may protect a sealing ring and a connector shell from being worn by a gasket, prolonging the service life of the sealing ring and the connector.

According to the present invention, there is provided a locking device adapted to lock a shell to an installation body, the locking device being according to independent claim 1.

According to the present invention, there is also provided a connector according to claim 11.

According to an embodiment of the present invention, the top end of the stopping arm has an arc-shaped end surface.

According to another embodiment of the present invention, the gasket has two stopping arms.

According to another embodiment of the present invention, the gasket is shaped as a fish tail.

According to another embodiment of the present invention, the gasket has four stopping arms.

According to another embodiment of the present invention, the gasket is shaped as a four-pointed star.

According to another embodiment of the present invention, the gasket has a symmetrical structure.

According to another embodiment of the present invention, the sealing ring is covered by the gasket to prevent the sealing ring from being exposed outside after locking the shell to the installation boy with the locking device.

According to an alternative aspect of the present invention, the sealing ring comprises an elastic ring and a rigid ring provided on an outer side of the elastic ring; and the rigid ring is configured to force the elastic ring to elastically deform inwardly in a radial direction when the elastic ring is pressed in an axial direction, so that the elastic ring reliably holds the thread connection member.

According to another alternative aspect of the present invention, the sealing ring comprises an elastic ring and a rigid ring provided in an inner of the elastic ring; and the rigid ring is configured to force the elastic ring to elastically deform inwardly in a radial direction when the elastic ring is pressed in an axial direction, so that the elastic ring reliably holds the thread connection member.

According to another embodiment of the present invention, an end face of the elastic ring is constructed to protrude outward by a predetermined height relative to an end face of the rigid ring.

According to another embodiment of the present invention, the gasket is pressed between a head of the thread connection member and the sealing ring after the shell is locked to the installation body by the locking device.

According to an embodiment of the present invention, the installation body is a flange adapted to be fixedly mounted on a panel.

According to another embodiment of the present invention, the installation body is adapted to be fixed to the panel by a screw.

In the embodiments of the present invention, the adjacent stopping arms on the gasket may simultaneously abut against an outer wall of the shell, and prevent the gasket from being rotated with the thread connection member. Thereby, the sealing ring and the shell may be protected from being worn by the gasket, prolonging the service life of the sealing ring and the connector.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative perspective view of a connector before a shell is locked to an installation body according to an exemplary embodiment of the present invention;
Fig.2 is an illustrative perspective view of the connector of Fig. 1 after the shell is locked to the installation body according to an exemplary embodiment of the present invention;
Fig.3 is an illustrative perspective view of a gasket of a locking device of the connector of Fig.2;
Fig.4 is an illustrative perspective view of a sealing ring of the locking device of the connector of Fig.2;
Fig.5 is a cross section view of the sealing ring of Fig.4;
Fig.6 is an illustrative perspective view of a sealing ring according to another embodiment of the present invention;
Fig.7 is a cross section view of the sealing ring of Fig.6;
Fig.8 is an illustrative perspective view of a gasket according to another embodiment of the present invention; and
Fig.9 is an illustrative perspective view of a connector after a shell is locked to an installation body according to another exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art according to the appended claims.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a locking device adapted to lock a shell to an installation body, the locking device comprising: a thread connection member adapted to pass through a connecting hole in the shell and be screwed into a threaded hole in the installation body; a sealing ring sleeved on the thread connection member and adapted to be pressed on an installation surface of the shell, so as to seal the connecting hole of the shell; and a gasket sleeved on the thread connection member and adapted to be pressed between the thread connection member and the sealing ring, so as to prevent the thread connection member from being loosened, wherein the gasket has at least two stopping arms, an angle defined between adjacent stopping arms of the at least two stopping arms is larger than 0 degrees and less than 180 degrees, top ends of the adjacent stopping arms on the gasket are adapted to simultaneously abut against an outer wall of the shell, so as to prevent the gasket from being rotated along with the thread connection member.

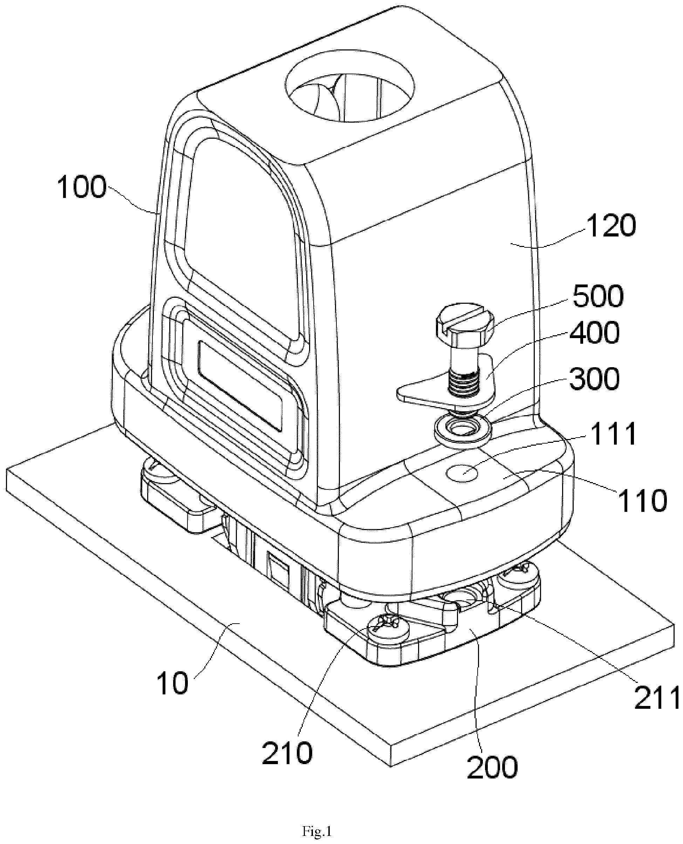

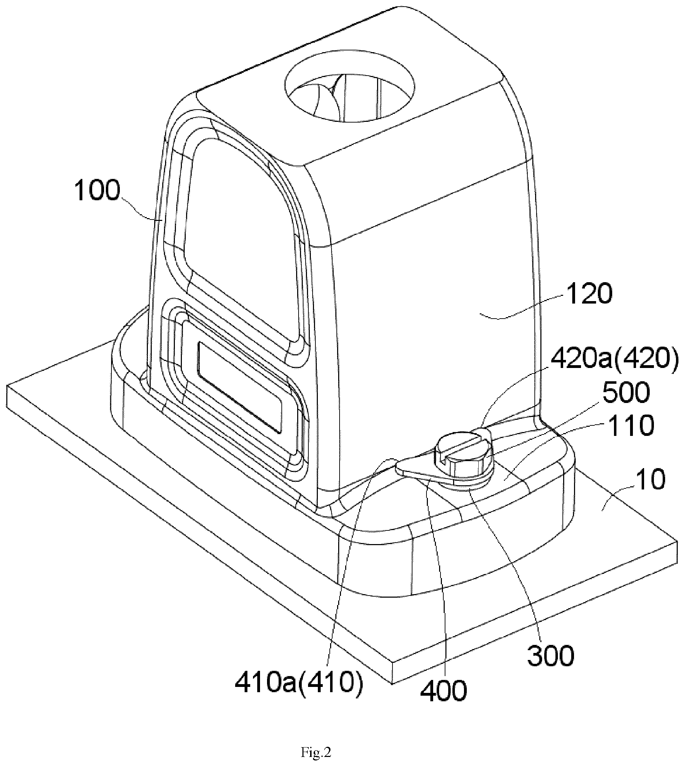

Fig.1 is an illustrative perspective view of a connector before a shell 100 is locked to an installation body 200 according to an exemplary embodiment of the present invention; Fig.2 is an illustrative perspective view of the connector of Fig. 1 after the shell 100 is locked to the installation body 200 according to an exemplary embodiment of the present invention.

As shown in Figs. 1-2, in an embodiment, the locking device is adapted to lock a shell 100 of a connector to an installation body 200. As clearly shown in Fig.1, the locking device mainly comprises a thread connection member 500, a sealing ring 300 and a gasket 400. The thread connection member 500 is adapted to pass through a connecting hole 111 in the shell 100 and be screwed into a threaded hole 211 formed in the installation body 200. A sealing ring 300 is sleeved on the thread connection member 500 and adapted to be pressed on an installation surface 110 of the shell 100, so as to seal the connecting hole 111 of the shell 100. The gasket 400 is sleeved on the thread connection member 500 and adapted to be pressed between the thread connection member 500 and the sealing ring 300, so as to prevent the thread connection member 500 from being loosened.

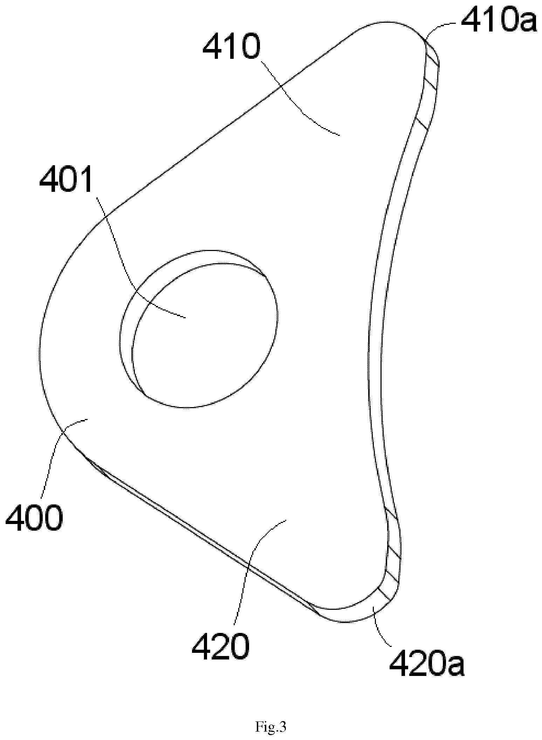

Fig.3 is an illustrative perspective view of the gasket 400 of a locking device of the connector of Fig.2.

As shown in Fig.3, in an embodiment, the gasket 400 may have at least two stopping arms 410, 420. An angle defined between two adjacent stopping arms 410, 420 of the at least two stopping arms 410, 420 is larger than 0 degrees and less than 180 degrees. Top ends 410a, 420a of the adjacent stopping arms 410, 420 on the gasket 400 are adapted to simultaneously abut against an outer wall 120 of the shell 100, so as to prevent the gasket 400 from being rotated along with the thread connection member 500.

As shown in Fig.3, in an embodiment, the top ends 410a, 420a of the stopping arms 410, 420 each has an arc-shaped end surface. Thus, it may facilitate the installation of the gasket 400, and it may protect the shell 100 of the connector from being impressed with an obvious indentation by the top ends 410a, 420a of the stopping arms 410, 420.

As shown in Fig.3, in an embodiment, a hole 401 is formed in the gasket (400). The thread connection member 500 passes through the hole 401.

As shown in Fig.3, in an embodiment, the gasket 400 has only two stopping arms 410, 420, and the gasket 400 is shaped as a fish tail.

For the convenience of manufacture and use, in the embodiment shown in Fig.3, the gasket 400 has a completely symmetrical structure.

Please be noted that the gasket of the present invention is not limited to the embodiment shown in Fig.3, the gasket may have three or more stopping arms, and may have any suitable shape.

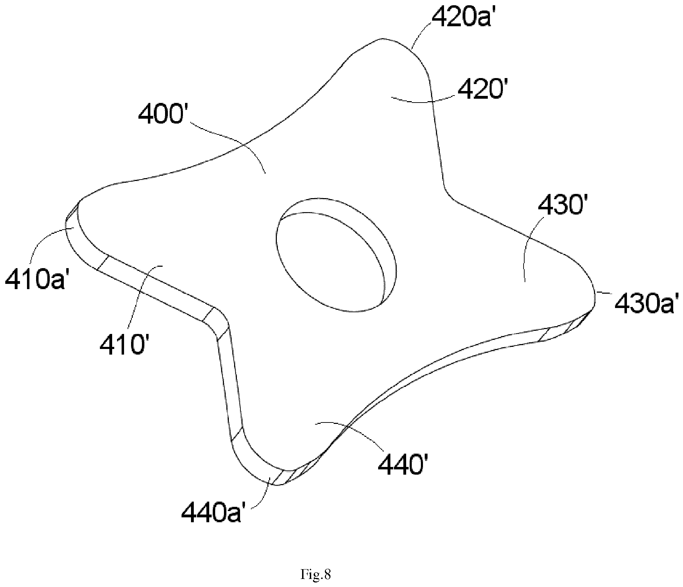

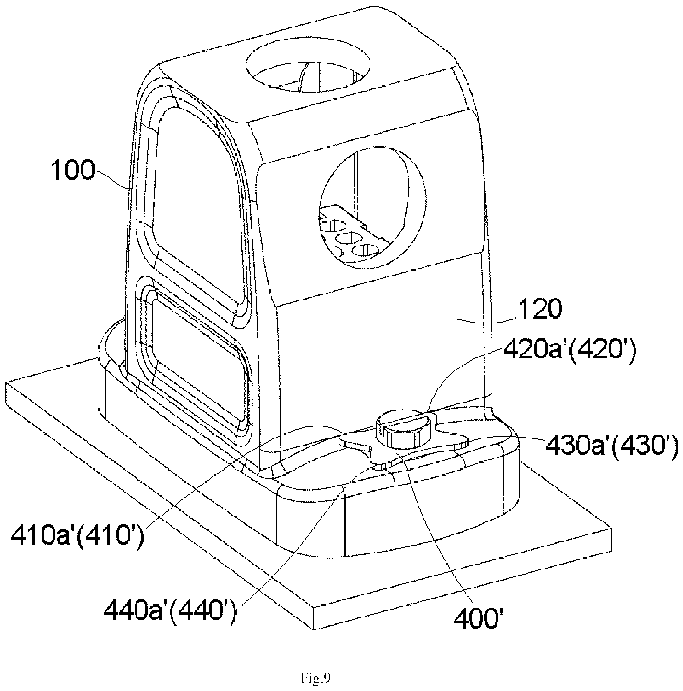

Fig.8 is an illustrative perspective view of a gasket 400' according to another embodiment of the present invention; and Fig.9 is an illustrative perspective view of a connector after a shell 100 is locked to an installation body 200 according to another exemplary embodiment of the present invention.

As shown in Figs.8-9, in an embodiment, the gasket 400' has four stopping arms 410', 420', 430', 440', and the gasket 400' is shaped as a four-pointed star.

As shown in Figs. 8-9, an angle defined between two adjacent stopping arms of the four stopping arms 410', 420', 430' and 440' is larger than 0 degrees and less than 180 degrees. Top ends 410a', 420a', 430a', 440a' of the two adjacent stopping arms on the gasket 400' are adapted to simultaneously abut against an outer wall 120 of the shell 100, so as to prevent the gasket 400' from being rotated along with the thread connection member 500.

For the convenience of manufacture and use, in the embodiment shown in Figs.8-9, the gasket 400' has a completely symmetrical structure.

As shown in Figs.2 and 9, in an embodiment, the gasket 400 is pressed between a head of the thread connection member 500 and the sealing ring 300 after the shell 100 is locked to the installation body 200 by the locking device. The sealing ring 300 is pressed on the shell 100 by the gasket 400.

As shown in Figs.2 and 9, in an embodiment, the sealing ring 300 is covered by the gasket 400, 400' to prevent the sealing ring 300 from being exposed outside after locking the shell 100 to the installation boy 200 with the locking device.

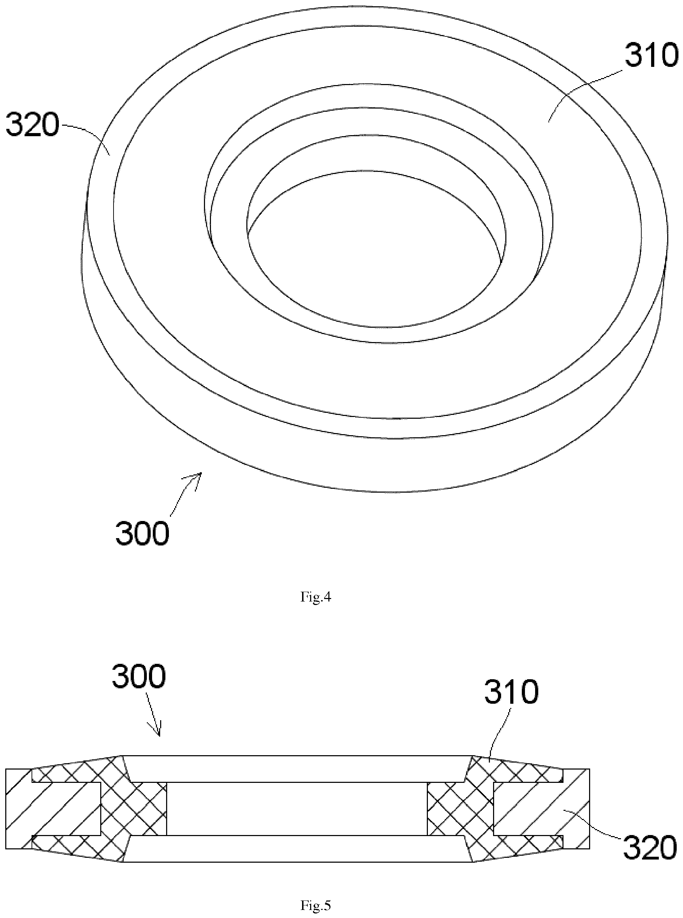

Fig.4 is an illustrative perspective view of a sealing ring 300 of the locking device of the connector of Fig.2; Fig.5 is a cross section view of the sealing ring 300 of Fig.4.

As shown in Figs.4-5, in an embodiment, the sealing ring 300 comprises an elastic ring 310 and a rigid ring 320 provided on an outer side of the elastic ring 310. In an embodiment, the elastic ring 310 may be made of elastic material, for example, rubber. The rigid ring 320 generally is made of steel, stainless steel or copper. In an embodiment, the elastic ring 310 may be molded on the rigid ring 320 by inserting mold.

As shown in Figs.4-5, in an embodiment, the rigid ring 320 is configured to force the elastic ring 310 to elastically deform inwardly in a radial direction when the elastic ring 310 is pressed in an axial direction, instead of elastically deforming outwardly in the radial direction. In this way, when the elastic ring 310 is pressed in the axial direction, it will elastically deform inwardly in the radial direction, and may reliably and tightly hold the thread connection member 500, which increases the sealing effect.

As shown in Figs.4-5, in an embodiment, an end face of the elastic ring 310 must protrude outward by a predetermined height in the axial direction relative to an end face of the rigid ring 320, so that the elastic ring 310 may be pressed and deformed by the gasket 400.

It should be appreciated for those skilled in this art that the sealing ring of the present invention is not limited to the embodiment shown in Figs.4-5.

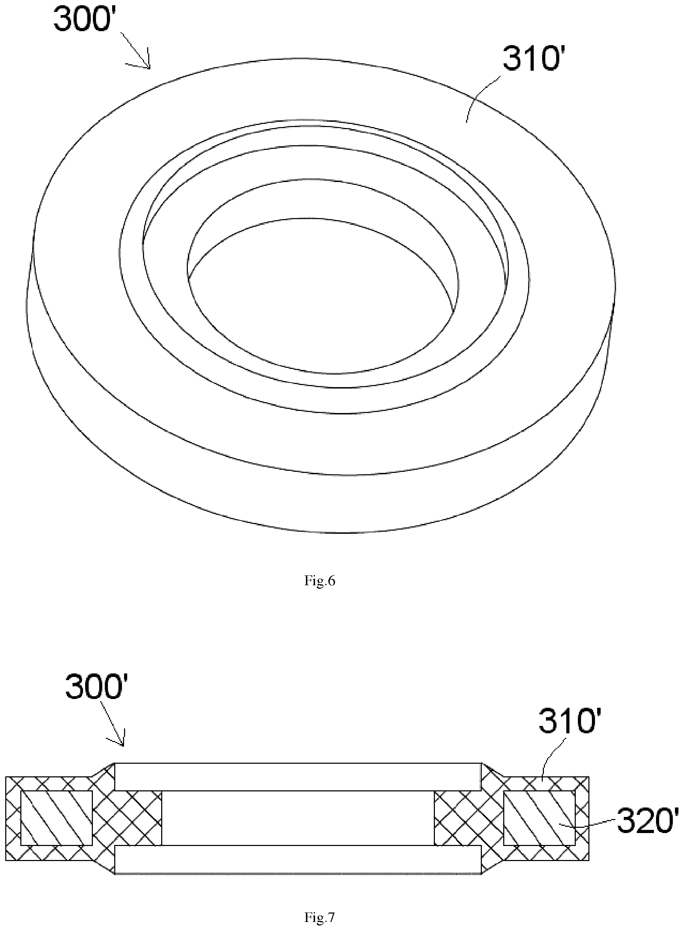

Fig.6 is an illustrative perspective view of a sealing ring 300' according to another embodiment of the present invention; Fig.7 is a cross section view of the sealing ring 300' of Fig.6.

As shown in Figs.6-7, in an embodiment, the sealing ring 300' comprises an elastic ring 310' and a rigid ring 320' provided in an inner of the elastic ring 310'. In an embodiment, the elastic ring 310' may be made of elastic material, for example, rubber. The rigid ring 320' generally is made of steel, stainless steel or copper. In an embodiment, the elastic ring 310' may be molded on the rigid ring 320' by inserting mold.

As shown in Figs.6-7, in an embodiment, the rigid ring 320' is configured to force the elastic ring 310' to elastically deform inwardly in a radial direction when the elastic ring 310' is pressed in an axial direction'. In this way, when the elastic ring 310' is pressed in the axial direction, it will elastically deform inwardly in the radial direction, and may reliably and tightly hold the thread connection member 500, which increases the sealing effect.

As shown in Figs.6-7, in an embodiment, an end face of the elastic ring 310' is constructed to protrude outward by a predetermined height in the axial direction relative to an end face of the rigid ring 320', so that the elastic ring 310' may be pressed and deformed by the gasket 400.

In another embodiment of the present invention, there is also disclosed a connector, as shown in Figs.1-2 and 9, the connector mainly comprises a shell 100, an installation body 200 and the above locking device. The locking device is configured to lock the shell 100 to the installation body 200.

In an embodiment as shown in Fig.1, the installation body 200 may be a flange adapted to be fixedly mounted on a panel 10. The installation body 200 may be fixed to the panel 10 by a screw 210.

In an embodiment, as shown in Figs. 1-2 and 9, the above connector may a heavy load connector.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle, taking into account the appended set of claims.

## Claims

1. A locking device adapted to lock a shell (100) to an installation body (200), the locking device comprising:
a thread connection member (500) adapted to pass through a connecting hole (111) in the shell (100) and be screwed into a threaded hole (211) in the installation body (200);
**characterized in that** it further comprises a sealing ring (300, 300') sleeved on the thread connection member (500) and adapted to be pressed on an installation surface (110) of the shell (100), so as to seal the connecting hole (111) of the shell (100); and
a gasket (400) sleeved on the thread connection member (500) and adapted to be pressed between the thread connection member (500) and the sealing ring (300, 300'), so as to prevent the thread connection member (500) from being loosened,
wherein the gasket (400) has at least two stopping arms (410, 420), an angle defined between two adjacent stopping arms (410, 420) of the at least two stopping arms (410, 420) is larger than 0 degrees and less than 180 degrees, and
wherein top ends (410a, 420a) of the adjacent stopping arms (410, 420) on the gasket (400) are adapted to simultaneously abut against an outer wall (120) of the shell (100), so as to prevent the gasket (400) from being rotated along with the thread connection member (500), wherein
the sealing ring (300, 300') comprises an elastic ring (310, 310') and a rigid ring (320, 320') provided on an outer side of the elastic ring (310) or in an inner of the elastic ring (310') wherein the rigid ring (320, 320') is configured to force the elastic ring (310, 310') to elastically deform inwardly in a radial direction when the elastic ring (310, 310') is pressed in an axial direction, so that the elastic ring (310, 310') reliably holds the thread connection member (500).

2. The locking device according to claim 1, wherein the top end (410a, 420a) of the stopping arm (410, 420) has an arc-shaped end surface.

3. The locking device according to claim 1, wherein the gasket (400) has two stopping arms (410, 420).

4. The locking device according to claim 3, wherein the gasket (400) is shaped as a fish tail.

5. The locking device according to claim 1, wherein the gasket (400') has four stopping arms (410', 420', 430', 440').

6. The locking device according to claim 5, wherein the gasket (400') is shaped as a four-pointed star.

7. The locking device according to any one of claims 1-6, wherein the gasket (400') has a symmetrical structure.

8. The locking device according to any one of claims 1-7,
wherein the sealing ring (300) is covered by the gasket (400, 400') to prevent the sealing ring (300) from being exposed outside after locking the shell (100) to the installation boy (200) with the locking device.

9. The locking device according to any one of claims 1-8,
wherein an end face of the elastic ring (310) is constructed to protrude outward by a predetermined height relative to an end face of the rigid ring (320).

10. The locking device according to claim 1,
wherein the gasket (400) is pressed between a head of the thread connection member (500) and the sealing ring (300) after the shell (100) is locked to the installation body (200) by the locking device.

11. A connector, comprising:
a shell (100);
an installation body (200); and
the locking device according to any one of claims 1-10 adapted to lock the shell (100) to the installation body (200).

12. The connector according to claim 11, wherein the installation body (200) is a flange adapted to be fixedly mounted on a panel (10).

13. The connector according to claim 12, wherein the installation body (200) is adapted to be fixed to the panel (10) by a screw (210).

## Patentansprüche

1. Arretiervorrichtung zum Arretieren eines Gehäuses (100) an einem Installationskörper (200), wobei die Arretiervorrichtung umfasst:
ein Gewinde-Verbindungselement (500), das so eingerichtet ist, dass es durch ein Verbindungsloch (111) in dem Gehäuse (100) hindurchtritt und in eine Gewindebohrung (211) in dem Installationskörper (200) eingeschraubt wird;
**dadurch gekennzeichnet, dass** es des Weiteren umfasst:
einen Dichtungsring (300, 300'), der auf das Gewinde-Verbindungselement (500) aufgeschoben wird und so eingerichtet ist, dass er an eine Installationsfläche (110) des Gehäuses (100) gepresst wird, um das Verbindungsloch (111) des Gehäuses (100) abzudichten; sowie
eine Dichtung (400), die auf das Gewinde-Verbindungselement (500) aufgeschoben wird und so eingerichtet ist, dass sie zwischen das Gewinde-Verbindungselement (500) und den Dichtungsring (300, 300') gepresst wird, um zu verhindern, dass das Gewinde-Verbindungselement (500) gelöst wird,
wobei die Dichtung (400) wenigstens zwei Anschlagarme (410, 420) aufweist, ein zwischen zwei benachbarten Anschlagarmen (410, 420) der wenigstens zwei Anschlagarme (410, 420) gebildete Winkel größer als 0° und kleiner als 180° ist, und
obere Enden (410a, 420a) der benachbarten Anschlagarme (410, 420) an der Dichtung (400) so eingerichtet sind, dass sie gleichzeitig an einer Außenwand (120) des Gehäuses (100) anschlagen, um zu verhindern, dass die Dichtung (400) zusammen mit dem Gewinde-Verbindungselement (500) gedreht wird, wobei
der Dichtungsring (300, 300') einen elastischen Ring (310, 310') sowie einen starren Ring (320, 320') umfasst, der an einer Außenseite des elastischen Rings (310) oder in einem inneren Teil des elastischen Rings (310') vorhanden ist, wobei der starre Ring (320, 320') so ausgeführt ist, dass er den elastischen Ring (310, 310') zwingt, sich in einer radialen Richtung elastisch nach innen zu verformen, wenn der elastische Ring (310, 310') in einer axialen Richtung gepresst wird, so dass der elastische Ring (310, 310') das Gewinde-Verbindungselement (500) zuverlässig hält.

2. Arretiervorrichtung nach Anspruch 1, wobei das obere Ende (410a, 420a) des Anschlagarms (410, 420) eine bogenförmige Endfläche hat.

3. Arretiervorrichtung nach Anspruch 1, wobei die Dichtung (400) zwei Anschlagarme (410, 420) aufweist.

4. Arretiervorrichtung nach Anspruch 3, wobei die Dichtung (400) fischschwanzartig geformt ist.

5. Arretiervorrichtung nach Anspruch 1, wobei die Dichtung (400') vier Anschlagarme (410', 420', 430', 440') aufweist.

6. Arretiervorrichtung nach Anspruch 5, wobei die Dichtung (400') wie ein vierzackiger Stern geformt ist.

7. Arretiervorrichtung nach einem der Ansprüche 1 - 6, wobei die Dichtung (400') eine symmetrische Struktur hat.

8. Arretiervorrichtung nach einem der Ansprüche 1 - 7,
wobei der Dichtungsring (300) durch die Dichtung (400, 400') abgedeckt wird, um zu verhindern, dass der Dichtungsring (300) nach Arretieren des Gehäuses (100) an dem Installationskörper (200) mit der Arretiervorrichtung nach außen hin freiliegt.

9. Arretiervorrichtung nach einem der Ansprüche 1 - 8, wobei eine Endfläche des elastischen Rings (310) so aufgebaut ist, dass sie um eine vorgegebene Höhe relativ zu einer Endfläche des starren Rings (320) nach außen vorsteht.

10. Arretiervorrichtung nach Anspruch 1, wobei die Dichtung (400) zwischen einen Kopf des Gewinde-Verbindungselementes (500) und den Dichtungsring (300) gepresst wird, nachdem das Gehäuse (100) mit der Arretiervorrichtung an dem Installationskörper (200) arretiert worden ist.

11. Verbinder (10), der umfasst:
ein Gehäuse (100);
einen Installationskörper (200); sowie
die Arretiervorrichtung nach einem der Ansprüche 1 - 10, die zum Arretieren des Gehäuses (100) an dem Installationskörper (200) eingerichtet ist.

12. Verbinder nach Anspruch 11, wobei der Installationskörper (200) ein Flansch ist, der so eingerichtet ist, dass er fest an einer Platte (10) montiert wird.

13. Verbinder nach Anspruch 12, wobei der Installationskörper (200) so eingerichtet ist, dass er mit einer Schraube (210) an der Platte (10) befestigt wird.

## Revendications

1. Dispositif de verrouillage conçu pour verrouiller une enveloppe (100) sur un corps d'installation (200), le dispositif de verrouillage comprenant :
un élément de connexion de fils (500) conçu pour traverser un trou de connexion (111) dans l'enveloppe (100) et pour être vissé dans un trou taraudé (211) ménagé dans le corps d'installation (200),
**caractérisé en ce qu'**il comprend en outre :
une bague d'étanchéité (300, 300') emboîtée sur l'élément de connexion de fils (500) et conçue pour être comprimée sur une surface d'installation (110) de l'enveloppe (100) de sorte à rendre étanche le trou de connexion (111) de l'enveloppe (100), et
un joint (400) emboîté sur l'élément de connexion de fils (500) et conçu pour être comprimé entre l'élément de connexion de fils (500) et la bague d'étanchéité (300, 300') de sorte à empêcher l'élément de connexion de fils (500) de se desserrer,
dans lequel le joint (400) possède au moins deux montants d'arrêt (410, 420), où l'angle défini entre deux montants d'arrêt (410, 420) adjacents parmi les deux montants d'arrêt (410, 420) ou plus est supérieur à 0 degré et inférieur à 180 degrés, et
dans lequel deux extrémités supérieures (410a, 420a) des deux montants d'arrêt (410, 420) adjacents sur le joint (400) sont conçues pour venir simultanément en butée contre une paroi externe (120) de l'enveloppe (100) de sorte à empêcher toute rotation du joint (400) en même temps que celle de l'élément de connexion de fils (500), où
la bague d'étanchéité (300, 300') comprend une bague élastique (310, 310') et une bague rigide (320, 320') disposée sur le flanc extérieur de la bague élastique (310) ou bien à l'intérieur de la bague élastique (310'), la bague rigide (320, 320') étant configurée pour forcer la bague élastique (310, 310') à se déformer élastiquement vers l'intérieur dans une direction radiale lorsque la bague élastique (310, 310') est comprimée dans la direction axiale, de sorte à ce que la bague élastique (310, 310') maintienne de façon fiable l'élément de connexion de fils (500).

2. Dispositif de verrouillage selon la revendication 1, dans lequel les extrémités supérieures (410a, 420a) du montant d'arrêt (410, 420) présentent une surface d'extrémité en forme d'arc.

3. Dispositif de verrouillage selon la revendication 1, dans lequel le joint (400) possède deux montants d'arrêt (410, 420).

4. Dispositif de verrouillage selon la revendication 3, dans lequel le joint (400) présente la forme d'une queue de poisson.

5. Dispositif de verrouillage selon la revendication 1, dans lequel le joint (400') possède quatre montants d'arrêt (410', 420', 430', 440').

6. Dispositif de verrouillage selon la revendication 5, dans lequel le joint (400') prend la forme d'une étoile à quatre branches.

7. Dispositif de verrouillage selon l'une quelconque des revendications 1 à 6, dans lequel le joint (400') présente une structure symétrique.

8. Dispositif de verrouillage selon l'une quelconque des revendications 1 à 7,
dans lequel la bague d'étanchéité (300) est recouverte par le joint (400, 400') afin d'empêcher l'exposition à l'extérieur de la bague d'étanchéité (300) après avoir verrouillé l'enveloppe (100) sur le corps d'installation (200) avec le dispositif de verrouillage.

9. Dispositif de verrouillage selon l'une quelconque des revendications 1 à 8,
dans lequel la face d'extrémité de la bague élastique (310) est constituée pour dépasser vers l'extérieur d'une hauteur prédéterminée par rapport à la face d'extrémité de la bague rigide (320).

10. Dispositif de verrouillage selon la revendication 1,
dans lequel le joint (400) est comprimé entre la tête de l'élément de connexion de fils (500) et la bague d'étanchéité (300) après que l'enveloppe (100) a été verrouillée sur le corps d'installation (200) par le dispositif de verrouillage.

11. Connecteur comprenant :
une enveloppe (100),
un corps d'installation (200), et
un dispositif de verrouillage conforme à l'une quelconque des revendications 1 à 10, conçu pour verrouiller l'enveloppe (100) sur le corps d'installation (200).

12. Connecteur selon la revendication 11, dans lequel le corps d'installation (200) est une collerette conçue pour être montée de façon fixe sur un panneau (10).

13. Connecteur selon la revendication 12, dans lequel le corps d'installation (200) est conçu pour être fixé au panneau (10) grâce à une vis (210).
